# EUROPEAN PATENT APPLICATION

(11) **EP 4 834 644 A1**
(43) Date of publication of application: **04.11.2026**
(21) Application number: 24911938.9
(22) Date of filing: 17.10.2024
(51) Int. Cl.: B60L 15/20, B60K 1/02, B60K 1/04, B60L 9/18, B60L 50/60, B60L 53/14, B60L 53/24, H02K 5/24, H02K 7/116

(54) **DRIVE DEVICE**

(30) Priority: 26.12.2023 JP 2023219567
(71) Applicant: TOYOTA JIDOSHA KABUSHIKI KAISHA, Toyota-Shi, Aichi-Ken 471-8571 (JP)
(72) Inventor: NAKAGAMI, Soma, Toyota-shi, Aichi 471-8571 (JP); OKUDA, Koichi, Toyota-shi, Aichi 471-8571 (JP); MASUDA, Yuto, Toyota-shi, Aichi 471-8571 (JP)
(74) Representative: D Young & Co LLP
(86) International application number: PCT/JP2024/037029
(87) International publication number: WO 2025/142045

(57) **Abstract**

A drive apparatus includes a first electric motor; a first power transmission mechanism; a second electric motor; a second power transmission mechanism; and an electricity storage device that supplies electric power to the first and second electric motors. The drive apparatus forms a charging circuit configured to supply a charging current from an external power source to the electricity storage device via a neutral point of the first electric motor. A reaction force applied to the first electric motor from the first power transmission mechanism when the first electric motor rotationally drives the first power transmission mechanism at a predetermined acceleration is greater than a reaction force applied to the second electric motor from the second power transmission mechanism when the second electric motor rotationally drives the second power transmission mechanism at the predetermined acceleration.

## Description

### Technical Field

The present invention relates to a drive apparatus.

### Background Art

Patent Document 1 describes a drive apparatus including two electric motors configured to drive left and right driving wheels. Further, Patent Document 2 describes a technology for utilizing two electric motors configured to drive driving wheels to charge an electricity storage device. In the technology of Patent Document 2, electric power is supplied to the electricity storage device from a charging device external to a vehicle via a neutral point of one of the two electric motors.

### Citation List

Patent Document 1: Japanese Patent Application Publication No. 2016-205444
Patent Document 2: Japanese Patent Application Publication No. 2009-118659

### Summary of Invention

### Technical Problem

In Patent Document 2, when electric power is supplied to the electricity storage device from the external charging device, the electric power is supplied via the neutral point of one of the two electric motors. In this case, vibrations may occur in the one electric motor due to a current flowing through the one electric motor. The present specification provides a technology for reducing vibrations of one electric motor of two electric motors when an external charging device is supplied to an electricity storage device via a neutral point of the one electric motor.

### Solution to Technical Problem

A drive apparatus disclosed in the present specification is configured to drive a pair of left and right driving wheels. The drive apparatus comprises a first electric motor; a first power transmission mechanism configured to transmit power from the first electric motor to at least one of the pair of left and right driving wheels; a second electric motor; a second power transmission mechanism configured to transmit power from the second electric motor to at least the other of the pair of left and right driving wheels; and an electricity storage device configured to supply electric power to the first electric motor and the second electric motor. The drive apparatus forms a charging circuit configured to supply a charging current from an external power source to the electricity storage device via a neutral point of the first electric motor. A reaction force applied to the first electric motor from the first power transmission mechanism when the first electric motor rotationally drives the first power transmission mechanism at a predetermined acceleration is greater than a reaction force applied to the second electric motor from the second power transmission mechanism when the second electric motor rotationally drives the second power transmission mechanism at the predetermined acceleration.

The drive apparatus described above is configured such that the reaction force applied to the first electric motor by the first power transmission mechanism is relatively greater that that applied to the second electric motor. Thus, when a current flows through the first electric motor to charge the electricity storage device, a rotational displacement of the first electric motor is suppressed by the first power transmission mechanism. Therefore, vibrations are unlikely to occur in the first electric motor. Accordingly, vibrations in the first electric motor can be reduced even when the electricity storage device is charged at a high voltage using coils of the first electric motor.

A drive apparatus according to another embodiment is also disclosed in the present specification. The drive apparatus according to this embodiment is configured to drive a pair of left and right driving wheels. The drive apparatus comprises a first electric motor; a first power transmission mechanism configured to transmit power from the first electric motor to at least one of the pair of left and right driving wheels; a second electric motor; a second power transmission mechanism configured to transmit power from the second electric motor to at least the other of the pair of left and right driving wheels; and an electricity storage device configured to supply electric power to the first electric motor and the second electric motor. The drive apparatus forms a charging circuit configured to supply a charging current from an external power source to the electricity storage device via a neutral point of the first electric motor. A number of first rotary components included in the first power transmission mechanism is greater than a number of second rotary components included in the second power transmission mechanism. The first rotary components include all components that are mirror images of the second rotary components.

In the drive apparatus described above, the number of first rotary components of the first power transmission mechanism is greater than the number of second rotary components of the second power transmission mechanism. Further, the first rotary components include all of the second rotary components but in mirror symmetry. Thus, when a current flows through the first electric motor to charge the electricity storage device, rotational displacement of the first electric motor is suppressed by the first power transmission mechanism. Therefore, vibrations are unlikely to occur in the first electric motor. Accordingly, vibrations in the first electric motor can be reduced even when the electricity storage device is charged at a high voltage using the coils of the first electric motor. It should be noted that the "first rotary components" include not only components located on a power transmission path along which the first power transmission mechanism transmits power but also rotary components that do not contribute to transmission of first power.

Details of the technology disclosed in this specification and further modifications thereof are described below in the section "Description of Embodiments".

### Brief Description of Drawings

[FIG. 1] A block diagram of an electrically powered vehicle comprising a drive apparatus 20 according to a first embodiment;
[FIG. 2] A circuit diagram of the drive apparatus 20 according to the first embodiment;
[FIG. 3] A detailed plan view of the drive apparatus 20 according to the first embodiment;
[FIG. 4] A detailed plan view of a drive apparatus 120 according to a second embodiment;
[FIG. 5] A detailed plan view of a drive apparatus 220 according to a third embodiment;
[FIG. 6] A detailed plan view of a drive apparatus 320 according to a fourth embodiment; and
[FIG. 7] A detailed plan view of a drive apparatus 420 according to a fifth embodiment. Description of Embodiments

In an embodiment of the present technology, inertia of the first power transmission mechanism may be greater than inertia of the second power transmission mechanism. However, in another embodiment, a frictional resistance of the first power transmission mechanism may be greater than a frictional resistance of the second power transmission mechanism.

In an embodiment of the present technology, the number of first rotary components included in the first power transmission mechanism may be greater than the number of second rotary components included in the second power transmission mechanism. Here, the first rotary components included in the first power transmission mechanism broadly refer to components that rotate during power transmission by the first power transmission mechanism and include components that do not directly contribute to the transmission of first power, such as a gear for a parking brake and an oil pump. The same applies to the second rotary components.

With this configuration, the first power transmission mechanism including more first rotary components than the second power transmission mechanism can suppress a rotational displacement of the first electric motor when a current flows through the first electric motor to charge the electric storage device. Thus, vibrations are unlikely to occur in the first electric motor.

In an embodiment of the present technology, the first rotary components may include a gear for parking brake in a vehicle comprising the pair of left and right driving wheels.

With this configuration, the reaction force applied to the first electric motor from the first power transmission mechanism can be readily increased using the gear for parking brake.

In an embodiment of the present technology, the first rotary components may include an oil pump configured to supply oil to the first power transmission mechanism.

With this configuration, the reaction force applied to the first electric motor from the first power transmission mechanism can be readily increased using the oil pump.

In an embodiment of the present technology, a first rotation shaft of the first power transmission mechanism may have a first outer diameter. In this case, a second rotation shaft of the second power transmission mechanism may have a second outer diameter which is smaller than the first outer diameter, wherein the second rotation shaft may be arranged in mirror symmetry to the first rotation shaft in a vehicle comprising the pair of left and right driving wheels.

With this configuration, the inertia of the first power transmission mechanism can be readily increased by the difference in rotation shaft diameter.

In an embodiment of the present technology, a frictional resistance of the first power transmission mechanism may be greater than a frictional resistance of the second power transmission mechanism. However, in another embodiment, inertia of the first power transmission mechanism may be greater than inertia of the second power transmission mechanism.

In an embodiment of the present technology, in a first bearing of the first power transmission mechanism, a first rolling element of the first bearing may be pressed with a first preload. In this case, in a second bearing of the second power transmission mechanism, a second rolling element of the second bearing may be pressed with a second preload which is less than the first preload, wherein the second bearing may be arranged in mirror symmetry to the first bearing in a vehicle comprising the pair of left and right driving wheels.

With this configuration, the frictional resistance of the first power transmission mechanism can be readily increased by changing the preload on corresponding bearing.

In an embodiment of the present technology, the first electric motor may be arranged in mirror symmetry to the second electric motor in a vehicle comprising the second electric motor and the pair of left and right driving wheels, and the first power transmission mechanism may be arranged in mirror symmetry to the second power transmission mechanism in the vehicle.

With this configuration, power of the electric motors is transmitted to the driving wheels arranged in mirror symmetry through the mechanisms arranged in mirror symmetry. This facilitates equalization of the outputs of the electric motors. Therefore, the electric motors can be readily controlled compared with a configuration in which power of the electric motors is transmitted through mechanisms arranged in asymmetry. However, vibrations that occur only in the first electric motor arranged in mirror symmetry to the second electric motor are likely to cause discomfort to a user. Accordingly, the technology disclosed in the present specification is useful especially in configurations in which the first electric motor and the first power transmission mechanism are arranged in mirror symmetry to the second electric motor and the second power transmission mechanism, respectively.

In an embodiment of the present technology, the drive apparatus may further comprise a first inverter located between the first electric motor and the electricity storage device; and a second inverter located between the second electric motor and the electricity storage device. However, in another embodiment, the drive apparatus may not comprise the first inverter or the second inverter.

In an embodiment of the present technology, the drive apparatus may further comprise a casing configured to house at least the first electric motor and the second electric motor. However, in another embodiment, the drive apparatus may comprise a first casing configured to house the first electric motor and a second casing configured to house the second electric motor.

In an embodiment of the present technology, the first power transmission mechanism may be configured to transmit power from the first electric motor to one of the pair of left and right driving wheels, and the second power transmission mechanism may be configured to transmit power from the second electric motor to the other of the pair of left and right driving wheels. Thus, power of the electric motors is transmitted to their corresponding drive wheels through the corresponding power transmission mechanisms. Therefore, in the drive apparatus according to this embodiment, the left and right driving wheels can be readily driven independently compared with a configuration in which the power is transmitted to both the left and right driving wheels through the first and second power transmission mechanisms. However, in another embodiment, the first power transmission mechanism may be configured to transmit power of the first electric motor to both the left and right driving wheels. In this case, the second power transmission mechanism may be configured to transmit power of the second electric motor to both the left and right driving wheels.

### (First Embodiment)

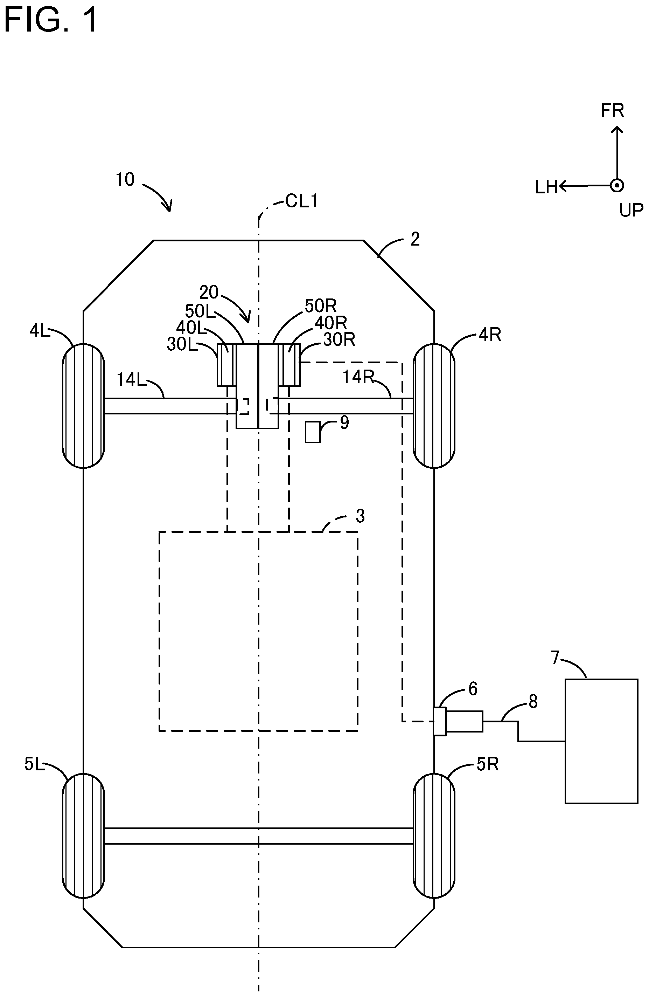

FIG. 1 is a block diagram illustrating a top view of an electrically powered vehicle 10 comprising a drive apparatus 20 according to an embodiment. In the present specification, the front side of the electrically powered vehicle 10 (i.e., the upper side of the sheet plane on which FIG. 1 is depicted) may be simply referred to as "front," and the opposite side may be simply referred to as "rear". Further, the left side of the electrically powered vehicle 10 (i.e., the left side of the sheet plane on which FIG. 1 is depicted) may be simply referred to as "left," and the opposite side may be simply referred to as "right".

The electrically powered vehicle 10 comprises a vehicle body 2, a pair of right and left front wheels 4R, 4L, a pair of right and left rear wheels 5R, 5L, a charging inlet 6, a parking brake 9, and the drive apparatus 20. The drive apparatus 20 comprises a pair of right and left electric motors 30R, 30L, a pair of right and left inverters 40R, 40L, a pair of right and left power transmission mechanisms 50R, 50L, and a battery pack 3. Hereinafter, the phrase "a pair of right and left elements" may be simply referred to as "a pair of elements".

The drive apparatus 20 supplies electric power of the battery pack 3 to the pair of electric motors 30R, 30L to drive the pair of front wheels 4R, 4L. Consequently, the electrically powered vehicle 10 is driven. That is, the pair of front wheels 4R, 4L are drive wheels of the electrically powered vehicle 10. In a modification, the pair of rear wheels 5R, 5L may be drive wheels of the electrically powered vehicle 10, or the pair of front wheels 4R, 4L and the pair of rear wheels 5R, 5L may be drive wheels of the electrically powered vehicle 10. It should be noted that examples of the "electrically powered vehicle" in the present specification include, for example, rechargeable electric vehicles charged by an external power source, fuel cell vehicles comprising fuel cells as a power source, and hybrid vehicles comprising an engine.

The charging inlet 6 is located in the right side surface of the vehicle body 2. The charging inlet 6 is configured to be connected to an external direct-current power source 7 (e.g., a charging stand) via a power cable 8.

The drive apparatus 20 according to the present embodiment has a substantially symmetrical shape with respect to a center line CL1 in a left-right direction of the electrically powered vehicle 10. Therefore, in the present embodiment, a configuration located rightward of the center line CL1 of the drive apparatus 20 is primarily described. The right inverter 40R is located above the right electric motor 30R (i.e., toward the reader side relative to the sheet plane on which FIG. 1 is depicted). The right power transmission mechanism 50R is located leftward of the right electric motor 30R. The left power transmission mechanism 50L is located between the right power transmission mechanism 50R and the left electric motor 30L.

The right power transmission mechanism 50R drives the right front wheel 4R, for example, at a rotational speed reduced from the rotational speed of the right electric motor 30R. That is, the right power transmission mechanism 50R transmits the power of the right electric motor 30R to the right front wheel 4R. The right power transmission mechanism 50R comprises a right drive shaft 14R. The right electric motor 30R drives the right front wheel 4R via the right drive shaft 14R. Similarly, the left electric motor 30L drives the left front wheel 4L via a left drive shaft 14L. In the present embodiment, the right drive shaft 14R is separated from the left drive shaft 14L in a central portion of the electric vehicle 10 in the left-right direction. The pair of front wheels 4R, 4L are independently driven by the pair of electric motors 30R, 30L.

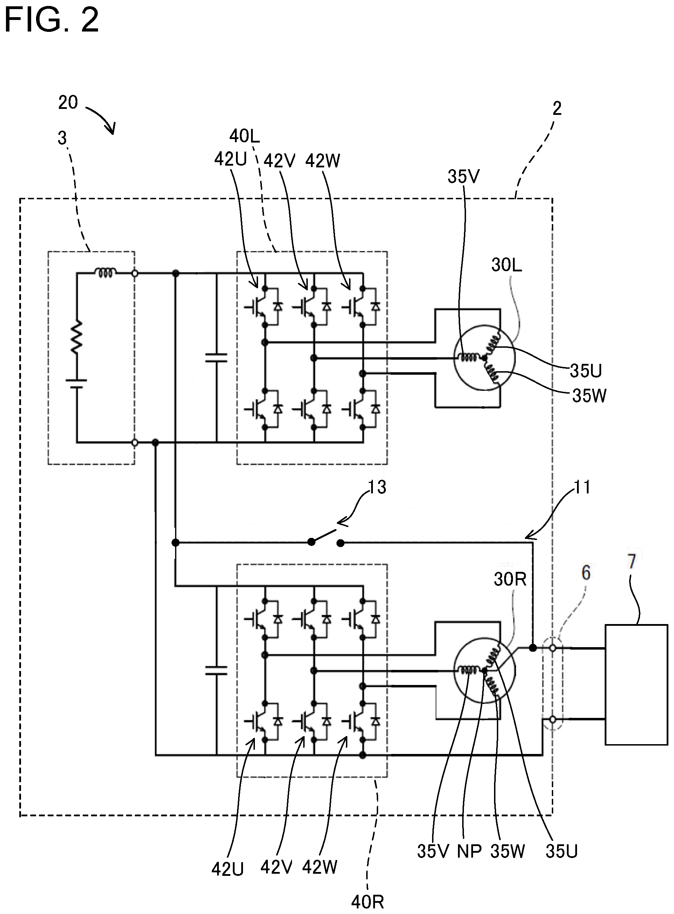

As illustrated in FIG. 2, the drive apparatus 20 forms a part of a circuit that connects the external direct-current power source 7 to the battery pack 3. The drive apparatus 20 forms a charging circuit 11 for supplying a charging current from the external direct-current power source 7 to the battery pack 3. The right electric motor 30R is a three-phase motor comprising a U-phase coil 35U, a V-phase coil 35V, and a W-phase coil 35W. One end of each of the U-phase coil 35U, the V-phase coil 35V, and the W-phase coil 35W is connected to a neutral point NP. The other end of the U-phase coil 35U is connected to a U-phase arm 42U, the other end of the V-phase coil 35V is connected to a V-phase arm 42V, and the other end of the W-phase coil 35W is connected to a W-phase arm 42W.

In the charging circuit 11 of the present embodiment, one terminal of the charging inlet 6 is connected to the positive electrode of the battery pack 3 via the neural point NP of the right electric motor 30R and the right inverter 40R. Further, the other terminal of the charging inlet 6 is connected to the negative electrode of the battery pack 3 via the right inverter 40R. The charging circuit 11 supplies the charging current to the battery pack 3 via the neutral point NP of the right electric motor 30R. Thus, the right electric motor 30R and the right inverter 40R can function as three boost circuits connected in parallel between the charging inlet 6 and the battery pack 3. Accordingly, the drive apparatus 20 can increase the output voltage of the external direct-current power source 7 by using the right electric motor 30R and the right inverter 40R. Therefore, rapid charging can be performed even if the output voltage of the external direct-current power source 7 is lower than the voltage of the battery pack 3. Further, the one terminal of the charging inlet 6 is directly connected to the positive electrode of the battery pack 3 via a switch 13. When the output voltage of the external direct-current power source 7 is substantially equal to the voltage of the battery pack 3, the charging circuit 11 allows the output voltage of the external direct-current power source 7 to bypass the neutral point NP of the right electric motor 30R by turning on the switch 13. Moreover, although not illustrated, the charging circuit 11 further comprises a charging unit including relay(s), capacitor(s), etc. The charging unit is connected to the neutral point NP and the right inverter 40.

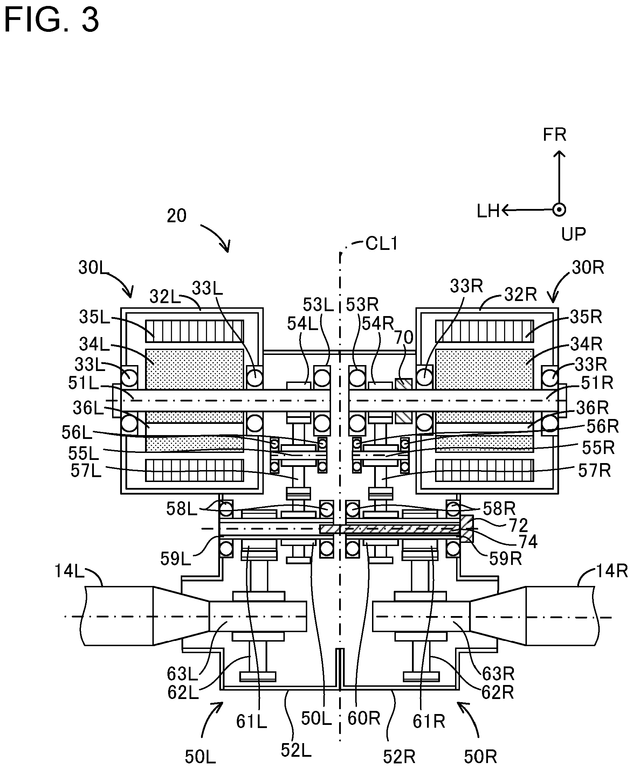

Referring to FIG. 3, the configuration of the drive apparatus 20 is described in detail. The right electric motor 30R of the drive apparatus 20 comprises a right motor case 32R, right motor shaft bearings 33R, a right rotor 34R, and a right stator 35R. The right motor case 32R houses the right rotor 34R and the right stator 35R. The right rotor 34R includes a permanent magnet 36R. The right stator 35R faces the right rotor 34R from radially outside the right rotor 34R. The outer periphery of the right stator 35R is covered by the U-phase coil 35U, the V-phase coil 35V, and the W-phase coil 35W (see FIG. 2). The phase coils 35U, 35V, and 35W are arranged long the circumferential direction of the right stator 35R. The right motor shaft bearings 33R are, for example, ball bearings and each of them may comprise a cylindrical inner race fixed to a rotation shaft, an outer race located radially outward of the inner race, and balls located between the inner race and the outer race. The right motor shaft bearings 33R rotate a first shaft 51R by rolling the balls along their inner races. Similarly, the other bearings are also ball bearings. In a modification, the bearings may be roller bearings instead of ball bearings.

The right power transmission mechanism 50R comprises, in addition to the right drive shaft 14R, the first shaft 51R, a right transmission case 52R, a first bearing 53R, a first gear 54R, a second shaft 55R, a pair of second bearings 56R, a second gear 57R, a third shaft 59R, a pair of third bearings 58R, a third gear 60R, a fourth gear 61R, a fifth gear 62R, and a fourth shaft 63R. These components, excluding the right transmission case 52R, are rotary components that the right power transmission mechanism 50R includes and rotate when the right power transmission mechanism 50R transmits power. The fourth shaft 63R is connected to the right drive shaft 14R.

The first shaft 51R is inserted in the right rotor 34R of the right electric motor 30R and rotates with the right rotor 34R. The first shaft 51R is rotatably fixed at the left and right ends of the motor case 32R via the pair of motor bearings 33R. The first shaft 51R penetrates the left wall of the motor case 32R and extends into the right transmission case 52R. The left end of the first shaft 51R is rotatably held by the right transmission case 52R via the first bearing 53R.

The first gear 54R is located adjacent to the first bearing 53R on the right side thereof. The first gear 54R is fixed to the first shaft 51R and rotates with the first shaft 51R. The first gear 54R is meshed with the second gear 57R. The second gear 57R is fixed to the second shaft 55R and rotates the second shaft 55R. The left and right ends of the second shaft 55R are both rotatably held by the right transmission case 52R via the pair of second bearings 56R. The second gear 57R is meshed with the third gear 60R fixed to the third shaft 59R. The third gear 60R rotates the third shaft 59R. The left and right ends of the third shaft 59R are both rotatably held by the right transmission case 52R via the pair of third bearings 58R. The fourth gear 61R is located adjacent to the third gear 60R on the right side thereof. The fourth gear 61R is fixed to the third shaft 59R. The fourth gear 61R rotates with the third shaft 59R.

The fourth gear 61R is meshed with the fifth gear 62R. The fifth gear 62R is fixed to the fourth shaft 63R and rotates the fourth shaft 63R. As described above, the fourth shaft 63R is connected to the right drive shaft 14R and rotates the right drive shaft 14R. As such, the right power transmission mechanism 50R transmits the power of the right electric motor 30R to the right front wheel 4R via the multiple shafts, bearings, and gears.

Similarly, the left power transmission mechanism 50L comprises left motor bearings 33L, a left rotor 34L, a first shaft 51L, a left transmission case 52L, a first bearing 53L, a first gear 54L, a second shaft 55L, a pair of second bearings 56L, a second gear 57L, a third shaft 59L, a pair of third bearings 58L, a third gear 60L, a fourth gear 61L, a fifth gear 62L, and a fourth shaft 63L. These components, excluding the left transmission case 52L, are rotary components that the left power transmission mechanism 50L includes and rotate when the left power transmission mechanism 50L transmits power. The power of the left electric motor 30L is transmitted to the left front wheel 4L by the rotation of the rotary components of the left power transmission mechanism 50L. As described above, the configuration of the left power transmission mechanism 50L is substantially a mirror image of the configuration of the right power transmission mechanism 50R. That is, the rotary components of the right power transmission mechanism 50R include components including all of the rotary components of the left power transmission mechanism 50L but in mirror symmetry, and these rotary components are arranged in a symmetric manner with respect to the center line CL.

As described above, the drive apparatus 20 according to the present embodiment forms the charging circuit 11 configured to supply the charging current from the external direct-current power source 7 to the battery pack 3 via the neutral point NP of the right electric motor 30R. Thus, while the current flows through the charging circuit 11 (i.e., while the charging inlet 6 is connected to the external direct-current power source 7 via the power cable 8), the current flows through the phase coils 35U, 35V, and 35W of the right electric motor 30R. This may result in, for example, generation of a d-axis current in the right electric motor 30R, thereby vibrating the right electric motor 30R.

Here, a parking gear 70 is disposed on the first shaft 51R of the right power transmission mechanism 50R. The parking gear 70 is a rotary component of the right power transmission mechanism 50R and rotates with the first shaft 51R during power transmission by the right power transmission mechanism 50R. The parking gear 70 is located between the first gear 54R and the motor case 32R. The parking gear 70 meshes with a parking lock (not illustrated) in response to the parking brake 9 (see FIG. 1) being operated to lock the first shaft 51R. Further, an oil pump 72 is fixed to the right end of the third shaft 59R. The oil pump 72 is a rotary component of the right power transmission mechanism 50R and rotates with the third shaft 59R during power transmission by the right power transmission mechanism 50R. The oil pump 72 is a so-called impeller and circulates oil within the drive apparatus 20. In an example, the oil pump 72 according to the present embodiment is configured to pump out the oil into an oil pipe 74 extending through the third shaft 59R. The oil pipe 74 extends through the third shaft 59R and to the left transmission case 52L of the left power transmission mechanism 50L. Thus, the oil pump 72 supplies the oil to the right power transmission mechanism 50R and the left power transmission mechanism 50L.

As illustrated in FIG. 3, the parking gear 70 is not disposed on the first shaft 51L of the left power transmission mechanism 50L. Thus, the inertia of the first shaft 51R of the right power transmission mechanism 50R is greater than the inertia of the first shaft 51L of the left power transmission mechanism 50L.

Similarly, the oil pump 72 is not fixed to the third shaft 59L of the left power transmission mechanism 50L. Thus, the inertia of the third shaft 59R of the right power transmission mechanism 50R is greater than the inertia of the third shaft 59L of the left power transmission mechanism 50L.

Accordingly, the ability of the right power transmission mechanism 50R to transmit power to the right front wheel 4R is less compared with the left power transmission mechanism 50L. In other words, in the drive apparatus 20, the reaction force applied to the right electric motor 30R from the right power transmission mechanism 50R when the right electric motor 30R rotationally drives the right power transmission mechanism 50R at a predetermined acceleration is greater than the reaction force applied to the left electric motor 30L from the left power transmission mechanism 50L when the left electric motor 30L rotationally drives the left power transmission mechanism 50L at the predetermined acceleration. Accordingly, if, for example, a d-axis current is generated in the right electric motor 30R due to the charging of the battery pack 3 via the neutral point NP of the right electric motor 30R, rotational displacement of the right electric motor 30R is suppressed by the right power transmission mechanism 50R. That is, the right electric motor 30R is less likely to vibrate. In this way, the drive apparatus 20 can reduce vibrations of the right electric motor 30R during charging of the battery pack 3. Consequently, during charging of the battery pack 3, the state of the right electric motor 30R through which a current flows becomes closer to the state of the left electric motor 30L through which no current flows. This makes it possible to suppress vibrations, which occur only in the right electric motor 30R, which is one of the pair of left and right electric motors 30R and 30L, from causing discomfort to the user.

Further, using the parking gear 70 and the oil pump 72, which are required for the electrically powered vehicle 10, to increase the inertia of the right power transmission mechanism 50R allows for a reduction in vibrations of the right electric motor 30R with high mass efficiency, for example, compared with using a separate mechanism to increase the inertia of the right power transmission mechanism 50R.

There may be a small gap between rotary components of the right power transmission mechanism 50R that are meshed with each other (e.g., the first gear 54R and the second gear 57R). Accordingly, in other conventional configurations, if the inertia of the second gear 57R is large, vibrations downstream of the second gear 57R can be suppressed, however, the first gear 54R may still vibrate by an amount corresponding to the gap. In view of this, the parking gear 70 according to the present embodiment is mounted on the first shaft 51R directly connected to the right electric motor 30R. Accordingly, the parking gear 70 can reliably reduce vibrations of the right electric motor 30R compared with a configuration configured to increase the inertia of a rotary component (e.g., the second gear 57R) indirectly connected to the right electric motor 30R via another rotary component.

In the drive apparatus 20 according to the present embodiment, the configurations of the right power transmission mechanism 50R and the left power transmission mechanism 50L are basically mirror-symmetric. However, the right power transmission mechanism 50R includes the parking gear 70 and the oil pump 72 which are not components of the left power transmission mechanism 50L. Thus, the number of rotary components included in the right power transmission mechanism 50R is greater than the number of rotary components included in the left power transmission mechanism 50L. Accordingly, the total weight of rotary components included in the right power transmission mechanism 50R is greater than the total weight of rotary components included in the left power transmission mechanism 50L, and the inertia of the right power transmission mechanism 50R is greater than the inertia of the left power transmission mechanism 50L. Therefore, when a current flows through the right electric motor 30R to charge the battery pack 3, rotational displacement of the right electric motor 30R is suppressed by the right power transmission mechanism 50R. Thus, the right electric motor 30R is less likely to vibrate. In this way, vibrations of the right electric motor 30R can be reduced even when the battery pack 3 is charged with a high voltage through the coils 35U, 35V, and 35W of the right electric motor 30R.

While the electrically powered vehicle 10 is traveling, an ECU (not illustrated) of the electrically powered vehicle 10 controls the electric motors 30R and 30L taking into account the inertia difference between the right power transmission mechanism 50R and the left power transmission mechanism 50L. Thus, the inertia difference between the power transmission mechanisms 50R and 50L does not affect the traveling of the electrically powered vehicle 10. Further, when the electrically powered vehicle 10 stops traveling, the electric motors 30R and 30L function as electric generators and supply regenerative power to the battery pack 3. At this time, the right electric motor 30R can supply greater regenerative power to the battery pack 3 than the left electric motor 30L because the right electric motor 30R drives the right power transmission mechanism 50R having the greater inertia than the left power transmission mechanism 50L. Accordingly, deterioration in the energy efficiency of the drive apparatus 20 due to the great inertia of the right power transmission mechanism 50R can be suppressed.

### (Correspondence Relationships)

The right electric motor 30R is an example of "first electric motor". The left electric motor 30L is an example of "second electric motor". In a modification, the right electric motor 30R may be the "second electric motor" and the left electric motor 30L may be the "first electric motor". The battery pack 3 may be an example of "electricity storage device". The outer diameter D1 is an example of "first outer diameter". The outer diameter D2 is an example of "second outer diameter". The right inverter 40R is an example of "first inverter". The left inverter 40L is an example of "second inverter".

### (Second Embodiment)

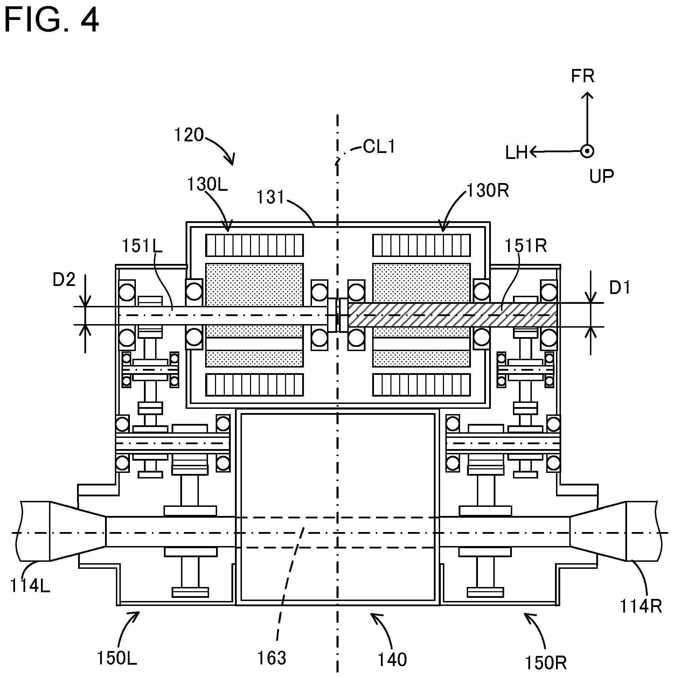

Referring to FIG. 4, the configuration of a drive apparatus 120 according to a second embodiment is described. Compared with the above-described drive apparatus 20 according to the first embodiment, the drive apparatus 120 according to the present embodiment is different therefrom in the arrangement of electric motors 130R and 130L, power transmission mechanisms 150R and 150L, and inverter 140. Additionally, in the drive apparatus 120 according to the present embodiment, a right drive shaft 114R is connected to a left drive shaft 114L via a connection shaft 163. That is, the drive apparatus 120 according to the present embodiment drives a single drive shaft using power of the electric motors 30R and 30L. However, the drive apparatus 120 according to the present embodiment still has substantially the same configuration as that of the drive apparatus 20 according to the first embodiment.

Although the right power transmission mechanism 150R according to the present embodiment is arranged differently from the right power transmission mechanism 50R according to the first embodiment, these mechanisms have substantially the same configuration. Therefore, a detailed description on how the right power transmission mechanism 150R drives the right front wheel 4R is omitted.

In the present embodiment, the electric motors 130R and 130L are housed in the same motor case 131, unlike the electric motors 30R and 30L according to the first embodiment. The motor case 131 may comprise a single case or an assembly of multiple cases fixed to each other. Further, in the present embodiment, a pair of power transmission mechanisms 150R, 150L is located on the vehicle-outboard sides relative to the motor case 131. In other words, the motor case 131 housing the pair of electric motors 130R, 130L therein is located between the pair of power transmission mechanisms 150R, 150L. Additionally, the inverter 140 is also located between the pair of power transmission mechanisms 150R, 150L. The inverter 140 is located rearward of the motor case 131. The inverter 140 has the function of the above-described inverters 40R and 40L.

The drive apparatus 120 according to the present embodiment does not comprise the above-described parking gear 70. In the drive apparatus 120, a first shaft 151R of the right power transmission mechanism 150R has an outer diameter D1, while a first shaft 151L of the left power transmission mechanism 150L, which is arranged in mirror symmetry to the first shaft 151R of the right power transmission mechanism 150R, has an outer diameter D2 that is smaller than the outer diameter D1. The shafts 151R and 151L are both cylindrical in shape and formed of the same material. Thus, the inertia of the first shaft 151R having the greater outer diameter D1 is greater than the inertia of the first shaft 151L having the smaller outer diameter D2. Accordingly, in the drive apparatus 120 according to the present embodiment, vibrations of the right electric motor 130R can be reduced during charging of the battery pack 3 because the inertia of the first shaft 151R of the right power transmission mechanism 150R connected to the right electric motor 130R through which a current flows during charging of the battery pack 3 is greater than the inertia of the left power transmission mechanism 150L. In the present embodiment, the motor case 131 is an example of "casing".

### (Third Embodiment)

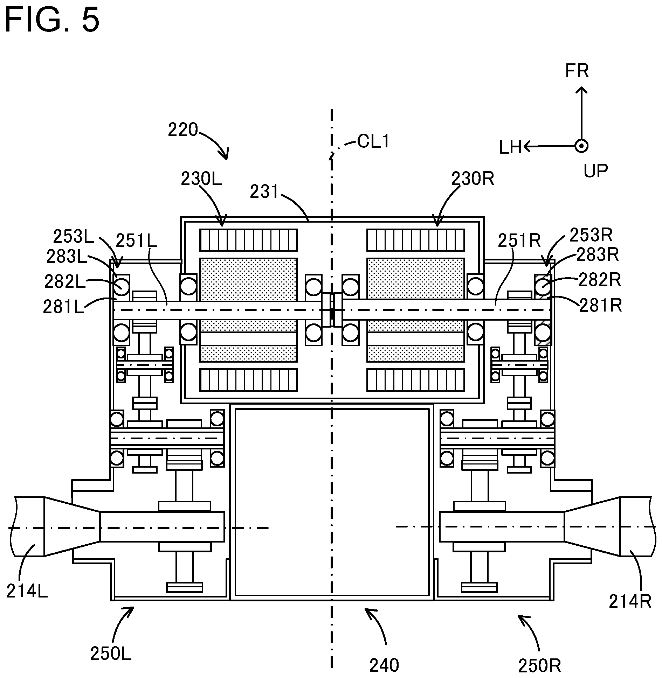

Referring to FIG. 5, the configuration of a drive apparatus 220 according to a third embodiment is described. Compared with the above-described drive apparatus 120 according to the second embodiment, a right drive shaft 214R is separated from a left drive shaft 214L in the drive apparatus 220 according to the present embodiment, as in the drive apparatus 20 according to the first embodiment. Further, in the drive apparatus 220 according to the present embodiment, first shafts 251R and 251L of power transmission mechanisms 250R and 250L have the same outer diameter. However, in the drive apparatus 220 according to the present embodiment, a preload setting for a first bearing 253R located at the right end of the first shaft 251R of the right power transmission mechanism 250R is different from a preload setting for a first bearing 253L located at the right end of the first shaft 251L of the left power transmission mechanism 250L. Specifically, a first preload is set for the first bearing 253R of the right power transmission mechanism 250R, and a second preload which is smaller than the first preload is set for the first bearing 253L of the left power transmission mechanism 250L. Thus, in the first bearing 253R of the power transmission mechanism 250R, balls 282R of the first bearing 253R are pressed with the first preload by an inner race 281R and an outer race 283R. In contrast, in the first bearing 253L of the left power transmission mechanism 250L, balls 282L of the first bearing 253L are pressed with the second preload, which is smaller than the first preload, by an inner race 281L and an outer race 283L. That is, the first bearing 253R of the right power transmission mechanism 250R is more resistant to rotation than the first bearing 253L of the left power transmission mechanism 250L.

Accordingly, a frictional resistance of the first bearing 253R against the rotation of the first shaft 251R of the right power transmission mechanism 250R is greater than a frictional resistance of the first bearing 253L against the rotation of the first shaft 251L of the left power transmission mechanism 250L. Thus, a reaction force applied to a right electric motor 230R from the right power transmission mechanism 250R when the right electric motor 230R rotationally drives the right power transmission mechanism 250R at a predetermined acceleration is greater than a reaction force applied to a left electric motor 30L from the left power transmission mechanism 250L when the left electric motor 230L rotationally drives the left power transmission mechanism 250L at the predetermined acceleration. This reduces vibrations of the right electric motor 230R during charging of the battery pack 3. In the present embodiment, the balls 282R are an example of "first rolling element", and the balls 282L are an example of "second rolling element".

### (Fourth Embodiment)

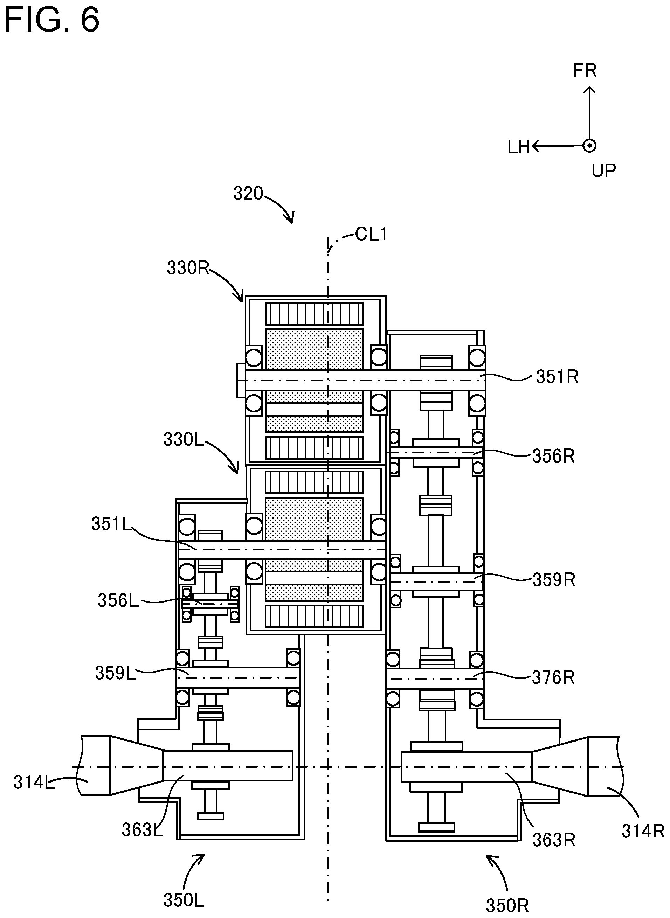

Referring to FIG. 6, a drive apparatus 320 according to a fourth embodiment is described. In the above-described first to third embodiments, each of the drive apparatuses 20, 120, and 220 is substantially symmetric with respect to the center line CL1 in the left-right direction of the electrically powered vehicle 10. However, the drive apparatus 320 according to the present embodiment is not symmetric with respect to the center line CL1. Electric motors 330R and 330L according to the present embodiment are arranged along the vehicle front-rear direction. In the present embodiment, the right electric motor 330R for driving the right front wheel 4R is located forward of the left electric motor 330L for driving the left front wheel 4L. Further, the electric motors 330R and 330L are located between a pair of power transmission mechanisms 350R, 350L.

Accordingly, as illustrated in FIG. 6, the distance in the front-rear direction between the right electric motor 330R and a right drive shaft 314R is greater than the distance in the front-rear direction between the left electric motor 330L and the right drive shaft 314R. The right power transmission mechanism 350R transmits power of the right electric motor 330R to the right drive shaft 314R via five shafts 351R, 356R, 359R, 376R, and 363R as well as gears disposed on these shafts. The left power transmission mechanism 350L transmits power of the left electric motor 330L to a left drive shaft 314L via four shafts 351L, 356L, 359L, and 363L as well as gears disposed on these shafts. The right electric motor 330R rotates the five shafts 351R, 356R, 359R, 376R, and 363R as well as the five gears disposed thereon, while the left electric motor 330L rotates the four shafts 351L, 356L, 359L, and 363L as wall as the four gears disposed thereon. Thus, a reaction force applied to the right electric motor 330R from the right power transmission mechanism 350R when the right electric motor 330R rotationally drives the right power transmission mechanism 350R at a predetermined acceleration is greater than a reaction force applied to the left electric motor 330L from the left power transmission mechanism 350L when the left electric motor 330L rotationally drives the left power transmission mechanism 350L at the predetermined acceleration. This reduces vibrations of the right electric motor 330R during charging of the battery pack 3. In the present embodiment, the right electric motor 30R located forward is an example of "first electric motor", and the left electric motor 30L located rearward is an example of "second electric motor". In a modification, the "first electric motor" may be located rearward of the "second electric motor".

### (Fifth Embodiment)

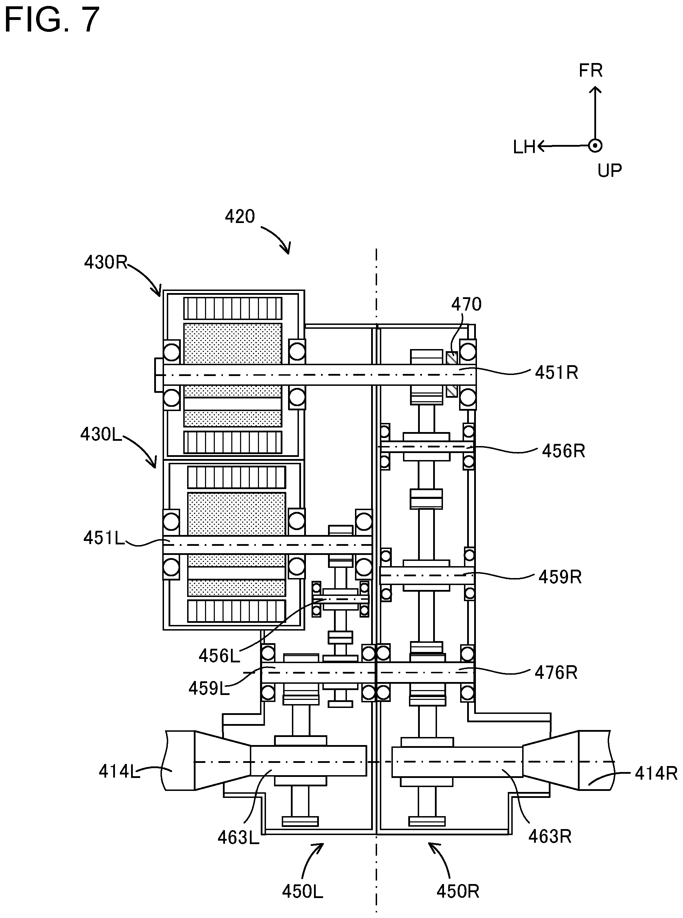

Referring to FIG. 7, a drive apparatus 420 according to a fifth embodiment is described. As in the above-described drive apparatus 320 according to the fourth embodiment, electric motors 430L and 430R of the drive apparatus 420 according to the present embodiment are arranged along the vehicle front-rear direction. That is, the drive apparatus 420 is asymmetric. However, in the drive apparatus 420 according to the present embodiment, a left power transmission mechanism 450L is located rightward of the electric motors 430L and 430R, and a right power transmission mechanism 450R is located rightward of the left power transmission mechanism 450L.

In the drive apparatus 420 according to the present embodiment as well, the right power transmission mechanism 450R transmits power of the right electric motor 430R to a right drive shaft 414R via five shafts 451R, 456R, 459R, 476R, and 463R as well as gears disposed on these shafts. Further, the left power transmission mechanism 450L transmits power of the left electric motor 430L to a right drive shaft 414L via four shafts 451L, 456L, 459L, and 463L as well as gears disposed on these shafts. Additionally, a parking gear 470 is disposed on the first shaft 451R of the right power transmission mechanism 450R. Thus, a reaction force applied to the right electric motor 430R from the right power transmission mechanism 450R when the right electric motor 430R rotationally drives the right power transmission mechanism 450R at a predetermined acceleration is greater than a reaction force applied to the left electric motor 430L from the left power transmission mechanism 450L when the left electric motor 430L rotationally drives the left power transmission mechanism 450L at the predetermined acceleration. This reduces vibrations of the right electric motor 430R during charging of the battery pack 3.

While specific examples of the technology disclosed in the specification have been described above in detail, these examples are merely illustrative and place no limitation on the scope of the patent claims. The technology described in the patent claims also encompasses various changes and modifications to the specific examples described above. Modifications of the above-described embodiments are set forth below.

(Modification 1) In the above-described drive apparatus 20 according to the first embodiment, the inertia of the right power transmission mechanism 50R is increased by disposing the parking gear 70 and the oil pump 72 in the right power transmission mechanism 50R. Instead of this, in the present modification, the inertia of the first gear 54L of the left power transmission mechanism 50L may be decreased to less than the inertia of the first gear 54R of the right power transmission mechanism 50R, for example, by forming an opening in the first gear 54L to reduce the mass.

(Modification 2) The drive apparatus 20 according to the first embodiment may not comprise the inverters 40R or 40L.

(Modification 3) The motor case 131 of the drive apparatus 120 according to the third embodiment may further house the power transmission mechanisms 150R and 150L in addition to the electric motors 130R and 130L.

Specific examples of the present invention have been described in detail, however, these are mere exemplary indications and thus do not limit the scope of the claims. The art described in the claims includes modifications and variations of the specific examples presented above. Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

### Reference Signs List

3: battery pack; 4L: left front wheel; 4R: right front wheel; 5L, 5R: rear wheels; 6: charging inlet; 7: external direct-current power source; 8: power cable; 9: parking brake; 10: electrically powered vehicle; 11: charging circuit; 13: switch; 14L, 114L, 214L, 314L, 414L: left drive shaft; 14R, 114R, 214R, 314R, 414R: right drive shaft; 20, 120, 220, 320, 420: drive apparatus; 30L, 230L, 330L, 430L: left electric motor; 30R, 130R, 230R, 330R, 430R: right electric motor; 32R: right motor case; 33R: right motor bearing; 34R: right rotor; 35R: right stator; 35U: U-phase coil; 35V: V-phase coil; 35W: W-phase coil; 36R: permanent magnet; 40L: left inverter; 40R: right inverter; 42U: U-phase arm; 42V: V-phase arm; 42W: W-phase arm; 50L, 150L, 250L, 350L: left power transmission mechanism; 50R, 150R, 250R, 350R: right power transmission mechanism; 51L, 51R, 151L, 151R, 251L, 251R, 451R: first shaft; 52L: left transmission case; 52R: right transmission case; 53R, 253L, 253R: first bearing; 54L, 54R: first gear; 55R: second shaft; 56R: second bearing; 57R: second gear; 58R: third bearing; 59L, 59R: third shaft; 60R: third gear; 61R: fourth gear; 62R: fifth gear; 63R: fourth shaft; 70, 470: parking gear; 72: oil pump; 74: oil pipe; 140: inverter; 131: motor case; 163: connection shaft; 281L, 281R: inner race; 282L, 282R: balls; 283L, 283R: outer race; CL1: center line; D1, D2: outer diameter; NP: neutral point

## Claims

1. A drive apparatus configured to drive a pair of left and right driving wheels, comprising:
a first electric motor;
a first power transmission mechanism configured to transmit power from the first electric motor to at least one of the pair of left and right driving wheels;
a second electric motor;
a second power transmission mechanism configured to transmit power from the second electric motor to at least the other of the pair of left and right driving wheels; and
an electricity storage device configured to supply electric power to the first electric motor and the second electric motor, wherein
the drive apparatus forms a charging circuit configured to supply a charging current from an external power source to the electricity storage device via a neutral point of the first electric motor, and
a reaction force applied to the first electric motor from the first power transmission mechanism when the first electric motor rotationally drives the first power transmission mechanism at a predetermined acceleration is greater than a reaction force applied to the second electric motor from the second power transmission mechanism when the second electric motor rotationally drives the second power transmission mechanism at the predetermined acceleration.

2. The drive apparatus according to claim 1, wherein inertia of the first power transmission mechanism is greater than inertia of the second power transmission mechanism.

3. The drive apparatus according to claim 1, wherein a number of first rotary components included in the first power transmission mechanism is greater than a number of second rotary components included in the second power transmission mechanism.

4. The drive apparatus according to claim 3, wherein the first rotary components include a gear for a parking brake in a vehicle comprising the pair of left and right driving wheels.

5. The drive apparatus according to claim 3, wherein the first rotary components include an oil pump configured to supply oil to the first power transmission mechanism.

6. The drive apparatus according to claim 2, wherein a first rotation shaft of the first power transmission mechanism has a first outer diameter, and
a second rotation shaft of the second power transmission mechanism has a second outer diameter which is smaller than the first outer diameter, wherein the second rotation shaft is arranged in mirror symmetry to the first rotation shaft in a vehicle comprising the pair of left and right driving wheels.

7. The drive apparatus according to claim 1, wherein a frictional resistance of the first power transmission mechanism is greater than a frictional resistance of the second power transmission mechanism.

8. The drive apparatus according to claim 7, wherein in a first bearing of the first power transmission mechanism, a first rolling element of the first bearing is pressed with a first preload, and
in a second bearing of the second power transmission mechanism, a second rolling element of the second bearing is pressed with a second preload which is less than the first preload, wherein the second bearing is arranged in mirror symmetry to the first bearing in a vehicle comprising the pair of left and right driving wheels.

9. The drive apparatus according to claim 1, wherein the first electric motor is arranged in mirror symmetry to the second electric motor in a vehicle comprising the second electric motor and the pair of left and right driving wheels, and
the first power transmission mechanism is arranged in mirror symmetry to the second power transmission mechanism in the vehicle.

10. The drive apparatus according to claim 1, further comprising:
a first inverter located between the first electric motor and the electricity storage device; and
a second inverter located between the second electric motor and the electricity storage device.

11. The drive apparatus according to claim 1, further comprising a casing configured to house at least the first electric motor and the second electric motor.

12. The drive apparatus according to claim 1, wherein the first power transmission mechanism is configured to transmit power from the first electric motor to one of the pair of left and right driving wheels, and
the second power transmission mechanism is configured to transmit power from the second electric motor to the other of the pair of left and right driving wheels.

13. A drive apparatus configured to drive a pair of left and right driving wheels, comprising:
a first electric motor;
a first power transmission mechanism configured to transmit power from the first electric motor to at least one of the pair of left and right driving wheels;
a second electric motor;
a second power transmission mechanism configured to transmit power from the second electric motor to at least the other of the pair of left and right driving wheels; and
an electricity storage device configured to supply electric power to the first electric motor and the second electric motor, wherein
the drive apparatus forms a charging circuit configured to supply a charging current from an external power source to the electricity storage device via a neutral point of the first electric motor,
a number of first rotary components included in the first power transmission mechanism is greater than a number of second rotary components included in the second power transmission mechanism, and
the first rotary components include all of the second rotary components but in mirror symmetry.
